# EUROPÄISCHE PATENTSCHRIFT

(11) **EP 3 071 356 B1**
(45) Veröffentlichungstag und Bekanntmachung des Hinweises auf die Patenterteilung: **21.02.2024**
(21) Anmeldenummer: 14818887.3
(22) Anmeldetag: 20.11.2014
(51) Int. Cl.: B23C 5/10

(54) **FRÄSWERKZEUG**
MILLING TOOL
OUTIL DE FRAISAGE

(30) Priorität: 20.11.2013 DE 102013223725; 28.11.2013 DE 102013224434
(43) Veröffentlichungstag der Anmeldung: 28.09.2016
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2014/075128
(87) Internationale Veröffentlichungsnummer: WO 2015/075117

(56) Entgegenhaltungen:
- EP-A1- 1 908 543
- EP-A1- 2 030 712
- EP-A2- 0 528 243
- EP-A2- 2 724 803
- WO-A2-2007/113812
- DE-A1- 19 946 799
- US-A- 5 272 940
- US-A1- 2007 081 868

## Beschreibung

Die Erfindung betrifft ein Fräswerkzeug gemäß Oberbegriff des Anspruchs 1, das aus dem Dokument WO 2007/113812 A2 bekannt ist.

Fräswerkzeuge der hier angesprochenen Art sind bekannt (WO 2007/113812 A2, EP 1 908 543 A1, EP 2 030 712 A1, US 2007/081868 A1, DE 199 46 799 A1). Es hat sich herausgestellt, dass für viele Einsatzfälle die mögliche Bearbeitungsgeschwindigkeit nicht ausreicht, weil bei starker Belastung des Fräswerkzeugs Rissbildungen auftreten, die zu einem Bruch des Fräswerkzeugs führen. Aufgabe der Erfindung ist es daher, ein Fräswerkzeug zu schaffen, mit dem hohe Bearbeitungsgeschwindigkeiten möglich sind, ohne dass es zu einem Ausfall des Werkzeugs durch Rissbildung kommt. Die Aufgabe wird gelöst, indem ein Fräswerkzeug mit den Merkmalen des Anspruchs 1 geschaffen wird. Vorteilhafte Ausgestaltung ergeben sich aus den Unteransprüchen.

Das Fräswerkzeug wird mit einem eine Mittelachse und eine Stirnseite aufweisenden Grundkörper, mindestens einem Stollen sowie wenigstens einer an dem mindestens einen Stollen vorgesehen geometrisch definierten Schneide versehen, wobei die wenigstens eine Schneide in ihrem der Mittelachse nächstgelegenen Bereich unter einem Bogen in die Stirnfläche übergeht. Durch diese Ausgestaltung ist sichergestellt, dass sich in dem Übergangsbereich zwischen Schneide und Stirnfläche keine Ansatzbereiche für Risse ergeben, dass also beispielsweise Stufen, Kanten, scharfkantige Übergänge oder dergleichen entfallen. Auf diese Weise wird sichergestellt, dass bei der Bearbeitung eines Werkstücks mit dem Fräswerkzeug Belastungsspitzen vermieden werden, die zu einem Bruch des Werkzeugs führen könnten. Es ergibt sich damit auch eine höhere Stabilität des Fräswerkzeugs, die zu weniger Vibrationen bei Einsatz dieses Werkzeugs führt.

Bei einem besonders bevorzugten Ausführungsbeispiel ist vorgesehen, dass auch der mindestens eine von dem Grundkörper ausgehende Stollen kontinuierlich in die Stirnfläche des Fräswerkzeugs übergeht, sodass bei der Bearbeitung von Werkstücken auch hier keine Bereiche entstehen, in denen sich Belastungsspitzen ergeben. Insbesondere werden also auch hier Absätze, Sprünge oder auch ein Versatz vermieden, sodass sich das Fräswerkzeug durch eine hohe Stabilität auszeichnet, die wiederum zu einer Reduktion der bei der Bearbeitung eines Werkstücks auftretenden Vibrationen führt. Dies reduziert die Belastungen des Fräswerkzeugs bei der Bearbeitung eines Werkstücks und führt überdies zu einer besseren Oberflächenqualität bei dem bearbeiteten Werkstück.

Bei einem besonders bevorzugten Ausführungsbeispiel des Fräswerkzeugs ist vorgesehen, dass an dem mindestens einen Stollen, dort wo die wenigstens eine Schneide ausgebildet wird, eine PKD-Beschichtung oder ein mit dem Stollen verbundenes PKD-Element vorgesehen ist. Mit PKD wird hier polykristalliner Diamant angesprochen.

Besonders bevorzugt wird weiterhin ein Ausführungsbeispiel eines Fräswerkzeugs, welches eine PKD-Beschichtung beziehungsweise ein PKD-Element aufweist, bei dem der Grundkörper sowie der mindestens eine davon entspringende Stollen aus zähem, biegefestem Vollmetall besteht, insbesondere wie in ISO513 in den Anwendungsgruppen P30 bis P50 angegeben. Die Kombination von PKD und Vollhartmetall der hier angesprochenen Art führt dazu, dass die wenigstens eine Schneide eine hohe Schneidleistung gewährleistet, während durch das Vollhartmetall eine Rissbildung im Fräswerkzeug verhindert wird. Auch ergibt sich eine hohe Biegebruchfestigkeit.

Bei einem besonders bevorzugten Ausführungsbeispiel ist vorgesehen, dass die Stirnfläche eingezogen ausgebildet ist, also konkav, insbesondere kugelabschnittsförmig. Der mittlere Bereich des Fräswerkzeugs um die Mittelachse herum springt damit gegenüber der wenigstens einen Schneide zurück, sodass das Fräswerkzeug in Richtung seiner Mittelachse in ein Werkstück eingefahren werden kann, dass also eine Bearbeitung ins Volle möglich ist.

Weitere Ausgestaltungen und Vorteile ergeben sich aus den übrigen Unteransprüchen.

Die Erfindung wird im Folgenden anhand der Zeichnungen näher erläutert. Es zeigen:
- Figur 1: eine perspektivische Ansicht eines Ausführungsbeispiels eines Fräswerkzeugs,
- Figur 2: eine vergrößerte Seitenansicht des Fräswerkzeugs nach Figur 1, und
- Figur 3: eine Stirnseitenansicht des Fräswerkzeugs nach Figur 1.

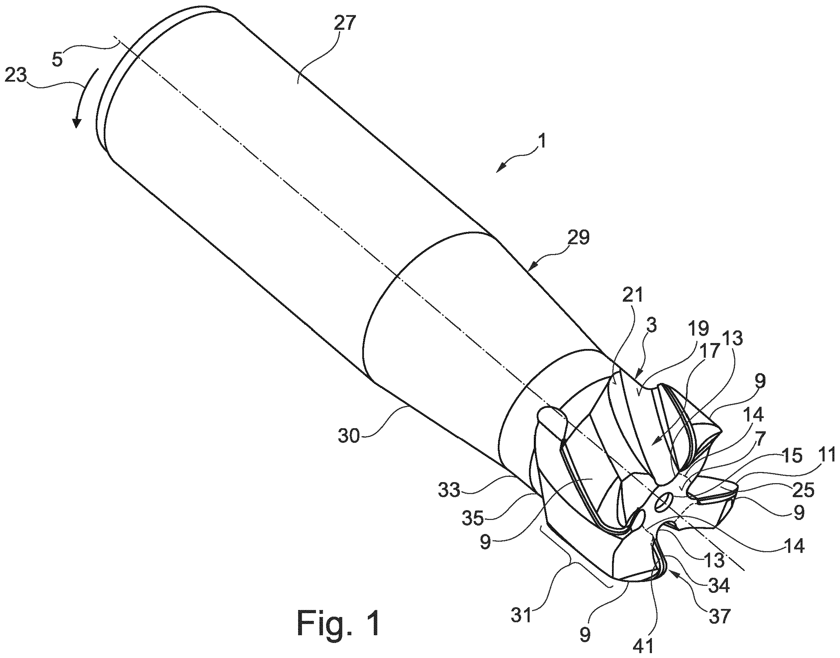

Figur 1 zeigt ein erstes Ausführungsbeispiel eines Fräswerkzeugs 1 mit einem Grundkörper 3, welcher eine Mittelachse 5 und eine Stirnfläche 7 aufweist. Von dem Grundkörper geht mindestens ein Stollen 9 aus. Bei dem hier dargestellten Ausführungsbeispiel sind vier gleichartige Stollen vorgesehen, die vorzugsweise in gleichem Umfangsabstand zueinander angeordnet sind und von dem Grundkörper 3 entspringen. Sie sind daher mit gleichen Bezugsziffern versehen.

Das Fräswerkzeug 1 weist wenigstens eine an einem Stollen 9 vorgesehene Schneide 11 auf, die geometrisch definiert ist. Das heißt, die Schneide 11 wird durch eine Kante eines Stollens 9 gebildet, und nicht, wie dies beispielsweise bei einem Schleifwerkzeug der Fall ist, durch die Kontur eines Schleifkorns. Vorzugsweise ist jedem Stollen 9 eine Schneide 11 zugeordnet.

Bei der Bearbeitung eines Werkstücks wird das Fräswerkzeug 1 um seine Mittelachse 5 in Rotation versetzt und zur Bearbeitung des Werkstücks senkrecht zu dieser Mittelachse verfahren, während es mit dem Werkstück in Eingriff tritt. Auf diese Weise ist es beispielsweise möglich, eine Nut in ein Werkstück einzubringen.

Aus der perspektivischen Ansicht des Fräswerkzeugs 1 ist erkennbar, dass die Schneiden 11 über einen Bogen 13 in die Stirnfläche 7 übergehen. Im Übergangsbereich zwischen Schneide und Stirnfläche ergibt sich also insbesondere kein Sprung, kein Absatz oder eine sonstige Verwerfung, die bei der Bearbeitung eines Werkstücks mittels des hier dargestellten Fräswerkzeugs 1 zu Belastungsspitzen führen könnten. Auf diese Weise werden Risse im Bereich des Übergangs zwischen Schneide 11 und Stirnfläche 7 vermieden.

Figur 1 zeigt, dass auch die Stollen 9 über einen Bereich 14 kontinuierlich beziehungsweise ansatzlos in die Stirnseite übergehen, sodass auch hier Stufen, Absätze, Verwerfungen oder dergleichen vermieden werden, die bei der Bearbeitung eines Werkstücks zu Belastungsspitzen führen könnten, damit zu einem Ausfall des Fräswerkzeugs 1 durch Bruch nach Entstehung von Rissen.

Die Vorderseite des Fräswerkzeugs 1 kann plan ausgebildet sein, sodass die Stirnfläche des Werkzeugs in einer Ebene liegt, auf welcher die Mittelachse 5 senkrecht steht.

Bei einem bevorzugten Ausführungsbeispiel des Fräswerkzeugs 1 ist, wie hier dargestellt, jedoch vorgesehen, dass die Stirnfläche 7 eingezogen, also konkav ausgebildet ist, sodass die Bereiche der Stirnfläche 7 nahe der Mittelachse 5 gegenüber radial weiter außen liegenden Bereichen axial zurückspringen. Besonders bevorzugt ist vorgesehen, dass die Stirnfläche 7 kugelabschnittsförmig ausgelegt ist.

Das hier dargestellte Ausführungsbeispiel des Fräswerkzeugs 1 weist einen Kühl-/Schmiermittelkanal auf, der sich in Längsrichtung durch das Fräswerkzeug 1 erstreckt und dessen Mündungsöffnung 15 im Bereich der Mittelachse 5 liegt, vorzugsweise konzentrisch zu dieser angeordnet ist.

Besonders bevorzugt ist vorgesehen, dass die Stirnfläche 7 zwischen der Mündungsöffnung und einem einem Stollen 9 zugeordneten Spanraum 17 stufenfrei ausgebildet ist. Aus dem Kühl-/Schmiermittelkanal beziehungsweise aus dessen Mündungsöffnung 15 austretendes Kühl-/Schmiermittel gelangt damit sehr gleichmäßig, vorzugsweise verwirbelungsfrei in den Stollen 9 zugeordnete Spanräume 17, sodass bei der Bearbeitung eines Werkstücks abgetragene Späne auch bei höchsten Zerspanungsraten optimal aus dem Bearbeitungsbereich über die Spanräume abgeführt werden können. Der Spantransport erfolgt also von der Stirnfläche 7 aus - in Figur 1 gesehen - im Wesentlichen nach links hinten, sodass Späne die bearbeitete Werkstückoberfläche nicht beeinträchtigen. Ein rascher und störungsfreier Spanabtransport sorgt auch dafür, dass die in den abgetragenen Spänen gespeicherte Wärme rasch abtransportiert wird, also dass sich das Werkzeug und das Werkstück nicht zu sehr erwärmen.

Vorzugsweise ist vorgesehen, wie in Figur 1 dargestellt, dass dem mindestens einen Stollen 9 jeweils ein Spanraum 17 zugeordnet ist. Hier sind also den vier Stollen jeweils ein Spanraum zugeordnet, sodass also auch vier Spanräume vorgesehen sind.

Die Spanräume 17 sind vorzugsweise, wie auch die Stollen 9 alle identisch ausgebildet. Jedem Spanraum 17 ist ein - im Querschnitt gesehen - bogenförmig ausgebildeter Grund 19 zugeordnet. Vorzugsweise ist der Grund kreisbogenförmig ausgelegt. Auf der dem Stollen 9 abgewandten Seite geht der Grund 19 in eine weniger als der Grund 19 gewölbte Flanke 21 über. Vorzugsweise ist vorgesehen, dass die Flanke 21 eben ausgebildet ist. Die Flanke 21 ist so geneigt, dass sich der Spanraum im Bereich der Flanke erweitert. Die Flanke geht vorzugsweise tangential in den Grund 19 über, ist jedoch gegenüber einer gedachten senkrecht auf dem Grund 19 stehenden Mittelebene nach außen, also von der Mittelebene weg verschwenkt, um die Erweiterung des Spanraums 17 zu gewährleisten.

Der Spanraum 17 ist vorzugsweise so ausgebildet, dass dessen Grund 19 im Bereich der Stirnfläche 7 näher an der Mittelachse 5 liegt, als dies an dem der Stirnseite 7 abgewandten Ende des Spanraums 17 der Fall ist. Diese Ausgestaltung gewährleistet besonders sicher, dass die von der wenigstens einen Schneide 11, also hier von den vier Schneiden abgetragenen Späne sicher nach außen abgeführt werden.

Zur Bearbeitung eines Werkstücks muss der Grundkörper 3 des Fräswerkzeugs 1 in Rotation versetzt werden. Durch ein in das Fräswerkzeug 1 eingeleitetes Drehmoment wird dieses in Richtung des Pfeils 23 in Rotation versetzt, sodass von den Schneiden 11 abgetragene Späne auf den Innenflächen der Stollen 9 ablaufen, wobei die Innenflächen die Spanflächen 25 der Schneiden 11 bilden, auf denen die von den Schneiden abgetragenen Späne in die jeweilig zugehörigen Spanräume 17 gelangen. Die Spanflächen 25 gehen vorzugsweise ansatzlos und kontinuierlich in den Grund 19 der Spanräume 17 über, um auch hier Spannungsspitzen zu vermeiden.

Zur Einleitung eines Drehmoments in das Fräswerkzeug 1 weist dieses hier einen Schaft 27 auf, der vorzugsweise zylindrisch ausgebildet und in eine geeignete Werkzeugaufnahme einführbar ist. Denkbar ist es, dass der mindestens eine Stollen, hier also die vier Stollen 9 aus einem zylindrischen Bereich entspringen, der unmittelbar an den Schaft 7 übergeht.

Besonders bevorzugt wird jedoch ein Fräswerkzeug, welches einen sich an den zylindrischen Schaft 27 anschließenden Hals 29 aufweist, dessen Außendurchmesser im Übergangsbereich zum Schaft 27 identisch ist, wie der Außendurchmesser des Schafts 27. Der erste Bereich 30 ist konisch ausgebildet und verjüngt sich ausgehend von dem Schaft 27 in Richtung auf die Stirnfläche 7.

Grundsätzlich ist es möglich, dass der konische Bereich 30 des Halses 29 an seinem dem Schaft 27 abgewandten Ende unmittelbar in den Bereich des Fräswerkzeugs 1 fortsetzt, von dem der mindestens eine Stollen, hier also die vier Stollen, entspringen. Dieser Bereich des Fräswerkzeugs wird auch als Werkzeugkopf 31 bezeichnet.

Besonders bevorzugt ist jedoch vorgesehen, dass an den konischen Bereich 30 des Halses 29, der sich unmittelbar an dem Schaft 27 anschließt, ein zylindrischer Bereich 33 des Halses 29 angrenzt.

Es ist nun wiederum möglich, dass sich der Werkzeugkopf 31 unmittelbar an diesen zylindrischen Bereich 33 anschließt.

Besonders bevorzugt ist jedoch, wie hier in Figur 1 dargestellt, vorgesehen, dass sich an den zylindrischen Bereich 33 ein weiterer konischer Bereich 35 anschließt, dessen Außendurchmesser im Übergang zum zylindrischen Bereich 33 dem entspricht, wie er im zylindrischen Bereich 33 vorgesehen ist, und der sich ausgehend von diesem zylindrischen Bereich 35 in Richtung auf die Stirnseite 7 konisch erweitert und in den Werkzeugkopf 31 übergeht.

Darüber hinaus kann schließlich bevorzugt vorgesehen sein, dass der sich an den Schaft 27 anschließende konische Bereich 30 des Halses 29 unmittelbar in den konischen Bereich 35 übergeht, dass also auf den zylindrischen Bereich 33 verzichtet wird.

Der sich an den zylindrischen Schaft 27 anschließende konische Bereich 30 des Halses 29 wird aus zwei Gründen bevorzugt: Zum einen ergibt sich bei dieser Ausführungsform eine höhere, insbesondere 20% größere Steifigkeit gegenüber einer Ausführungsform des Fräswerkzeugs 1, bei dem der Werkzeugkopf 31 unmittelbar in einen zylindrischen Hals übergeht. Zum anderen ist vorzugsweise vorgesehen, dass die der Stirnseite 7 abgewandten Enden der Spanräume 17 in einem Bereich liegen, dessen Außendurchmesser kleiner ist, als er unmittelbar in dem Bereich vorliegt, an den die der Stirnseite 7 abgewandten Enden der Stollen 9 angrenzen. Dies führt dazu, dass der Spanabtransport durch die Spanräume 17 besonders störungsfrei erfolgt.

Dieser optimierte Spanraumauslauf, also das der Stirnseite 7 abgewandte Ende der Spanräume 17, kann, wie bei dem Ausführungsbeispiel nach Figur 1 dargestellt, in einem zylindrischen Bereich 35 liegen. Sehr wohl denkbar ist es aber auch, dass der Spanauslauf in einem dem Schaft 27 abgewandten Ende des konischen Bereichs des Halses 29 angeordnet ist, nämlich dann, wenn auf den zylindrischen Bereich 33 verzichtet wird.

Bei dem Fräswerkzeug 1 der hier angesprochenen Art ist es möglich, die wenigstens eine Schneide 11 an einem Stollen 9 auszubilden, indem ein Kantenbereich auf übliche, bekannte Weise geschliffen wird. Die Schneide kann beispielsweise an den Außenrändern der Spanfläche 25 dadurch realisiert werden, dass in Umfangsrichtung und in Richtung der Mittelachse 5 nach vorne gegenüber der Stirnseite 7 gerichtete Außenflächen eines Stollens 9 geschliffen werden. Im Übergangsbereich zwischen den Außenflächen und der Spanfläche 25 wird dadurch eine Schneide 11 realisiert.

Um die Standfestigkeit des Fräswerkzeugs 1 zu verbessern, ist jedoch vorzugsweise vorgesehen, dass der mindestens eine Stollen, vorzugsweise natürlich sämtliche Stollen eines Fräswerkzeugs 1, zumindest im Bereich der Schneide 11, mit einer PKD-Beschichtung, also mit einer polykristallinen Diamant aufweisenden Beschichtung versehen werden, und durch Schleifen die Schneide 11 gerade im Bereich der PKD-Beschichtung realisiert wird. Dadurch wird die Schneide 11 aufgrund der bekannten Härte von PKD gegen übermäßigen Verschleiß auch bei hohen Zerspanungsraten geschützt, sodass die Standzeit des Werkzeugs erhöht wird.

Bevorzugt wird, wie in Figur 1 dargestellt, bei einem Ausführungsbeispiel des Fräswerkzeugs 1 in einem an den Spanraum 17 angrenzenden Bereich eines Stollens 9 ein vorzugsweise plattenförmiges PKD-Element aufgebracht, welches mit dem Material des Stollens 9 verklebt, verlötet, verschweißt oder auf sonstige bekannte Weise dauerhaft verbunden wird. Eine Oberfläche des PKD-Elements bildet die Spanfläche 25. Der äußere Rand des PKD-Elements wird auf bekannte Weise geschliffen, um an dem PKD-Element 37 die Schneide 11 zu realisieren.

Vorzugsweise weist das PKD-Element 37 zwei Schichten auf, nämlich eine dünne PKD-Schicht 39, die auf eine Hartmetall-Schicht 41 aufgebracht wird. Dabei ist es möglich, das PKD-Element 37 mit einer sehr dünnen PKD-Schicht auszubilden, was die Kosten der Herstellung des PKD-Elements 37 verringert. Im Übrigen erhöht sich dann der Hartmetallanteil im PKD-Element, was dessen Elastizität verbessert. Das PKD-Element 37 wird durch Kleben oder Löten, insbesondere durch Vakuum-Löten, an dem Stollen 9 befestigt.

In Figur 1 ist ein derartiges PKD-Element 37 dargestellt, welches eine PKD-Schicht 39 sowie eine Hartmetallschicht 41 aufweist, wobei die beiden Schichten miteinander, wie oben gesagt, auf geeignete, bekannte Weise miteinander verbunden sind. Die Schneide 11 wird bei dieser Ausgestaltung des PKD-Elements 37 innerhalb der PKD-Schicht 39 ausgebildet.

Grundsätzlich ist es auch möglich, eine PKD-Schicht auf eine Innenfläche, also auf eine dem Spanraum 17 zugewandte Fläche, aufzukleben beziehungsweise aufzulöten und auf eine Hartmetallschicht zu verzichten. Entscheidend ist, dass die Schneide innerhalb der PKD-Schicht realisiert wird und dass der Stollen 9 möglichst wenig geschwächt wird. Bevorzugt wird eine Dicke des plattenförmigen PKD-Elements 37 von 0,8 mm, bei dem die PKD-Schicht 39 eine Dicke von 0,3 mm aufweist. Die Dicke der Hartmetallschicht 41 beträgt somit 0,5 mm. In dieser Schicht wird eine unter 45° zur Seitenfläche des PKD-Elements 37 verlaufende Fase realisiert.

Bei einem Ausführungsbeispiel des Fräswerkzeugs 1 mit einer PKD-Beschichtung beziehungsweise mit einem PKD-Element 37 an dem mindestens einem Stollen 9 ist vorzugsweise vorgesehen, dass der Grundkörper 3 des Fräswerkzeugs 1, insbesondere der mindestens eine Stollen 9 aus einem zähen und biegefesten Vollhartmetall besteht, insbesondere wie in ISO513 in den Anwendungsgruppen P30 bis P50 angegeben, um bei der Bearbeitung eines Werkstücks Risse im Fräswerkzeug 1 zu vermeiden und um eine erhöhte Biegebruchfestigkeit zu realisieren. Das ansonsten nicht besonders verschleißarme Vollhartmetall wird durch die sehr harte PKD-Beschichtung beziehungsweise das PKD-Element 37 gegen Verschleiß geschützt, weil gerade hier die Schneide 11 realisiert ist.

Bei der Verwendung eines plattenförmigen PKD-Elements 37 ist vorzugsweise vorgesehen, dass das plattenförmige PKD-Element 37 einen überaus geringen, gegen 0 mm gehenden Überstand über die Außenfläche des Stollens 9 aufweist. Das heißt, der Stollen 9 kann also sehr massiv ausgebildet werden, damit eine maximale Stabilität aufweisen.

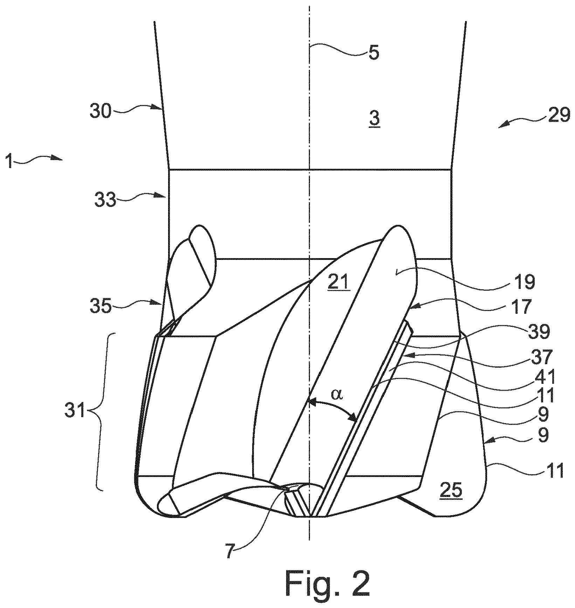

Figur 2 zeigt das vordere Ende des Fräswerkzeugs 1 gemäß Figur 1. Gleiche Teile sind mit gleichen Bezugsziffern versehen, sodass insofern auf die vorangegangene Beschreibung verwiesen wird. Das Fräswerkzeug 1 ist hier in vergrößerter Seitenansicht dargestellt, wobei hier der Schaft des Fräswerkzeugs 1 abgebrochen ist. Deutlich erkennbar ist der Werkzeugkopf 31 mit dem mindestens einen Stollen 9, wobei hier bei dem dargestellten Ausführungsbeispiel vier Stollen 9 vorgesehen sind. Jedem der Stollen 9 ist eine Schneide 11 zugeordnet, sodass das Fräswerkzeug 1 vier gleiche Schneiden 11 umfasst. Jedem der Stollen 9 ist ein Spanraum 17 zugeordnet, der sich von der Stirnseite 7 - in Figur 2 - nach schräg oben erstreckt. Erkennbar ist hier ebenfalls, dass der Spanraum 17 einen gewölbten, vorzugsweise kreisbogenförmig gewölbten Grund 19 und eine auf der dem Stollen 9 abgewandten Seite eine an den konkaven Grund 19 angrenzende Flanke 21 aufweist, die vorzugsweise kontinuierlich in den Grund 19 übergeht, sodass im Übergangsbereich keine Stufe beziehungsweise kein Absatz ausgebildet sind, sodass die von einer Schneide 11 abgetragenen Späne von der Flanke 21 störungsfrei an das der Stirnseite 7 abgewandte Ende des Spanraums 17 abtransportiert werden können.

Aus Figur 2 ist erkennbar, dass die dem Betrachter zugewandte Kante der Schneide 11 unter einem Achswinkel α gegenüber der Mittelachse 5 geneigt verläuft, sodass sich eine positive Schneidgeometrie ergibt. Dabei ist davon auszugehen, dass die dem Betrachter zugewandte Schneide 11 im Betrieb des Fräswerkzeugs 1 sich von rechts nach links bewegt und Späne von einem Werkstück abträgt, die über die Spanfläche 25 in den Spanraum 19 gelangen. Vorzugsweise ist der Achswinkel α abgestimmt auf den Durchmesser des Fräswerkzeugs 1 und auf die - sich in Draufsicht auf die Schneide 11 - ergebende Schneidkantenlänge, wie sie in Figur 2 dargestellt ist. Dabei wird der hier angesprochene Durchmesser hier durch den Flugkreis der mindestens einen Schneide 11 des Werkzeugkopfes 31 definiert. Liegt der Durchmesser des Fräswerkzeugs 1 in einem Bereich von 5 bis 32 mm, so wird ein Achswinkel α von 2° bis 30°, vorzugsweise von 4° bis 25°, gewählt. Aus der in Figur 2 dargestellten Seitenansicht des Fräswerkzeugs 1 wird ersichtlich, dass das der Stirnseite 7 abgewandte Ende des wenigstens einen Spanraums 17 in einem Abstand zum Werkzeugkopf 31 liegt, vorzugsweise in einem Bereich des Halses 29, der einen kleineren Außendurchmesser aufweist als der Werkzeugkopf 31. Bei dem in den Figuren 1 und 2 dargestellten Ausführungsbeispiel des Fräswerkzeugs ist vorgesehen, dass sich - ausgehend von der Stirnseite 7 - jenseits des Werkzeugkopfs 31 ein konischer Bereich 35 anschließt, der sich ausgehend vom Werkzeugkopf 31 verjüngt. Anschließend ist, wie hier dargestellt, ein zylindrischer Bereich 33 vorgesehen, der einerseits an den konischen Bereich 35 angrenzt, andererseits aber an einen weiteren konischen Bereich 30, der sich bis zum Schaft 27 erstreckt und in Richtung des Schafts 27 erweitert. Dies ist aus Figur 1 ersichtlich.

Möglich ist es aber auch, auf den zylindrischen Bereich 33 zu verzichten und vorzusehen, dass die der Stirnseite 7 abgewandten Enden der Spanräume 17 in den an dem zylindrischen Schaft 27 angrenzenden konischen Bereich 30 des Halses 29 enden.

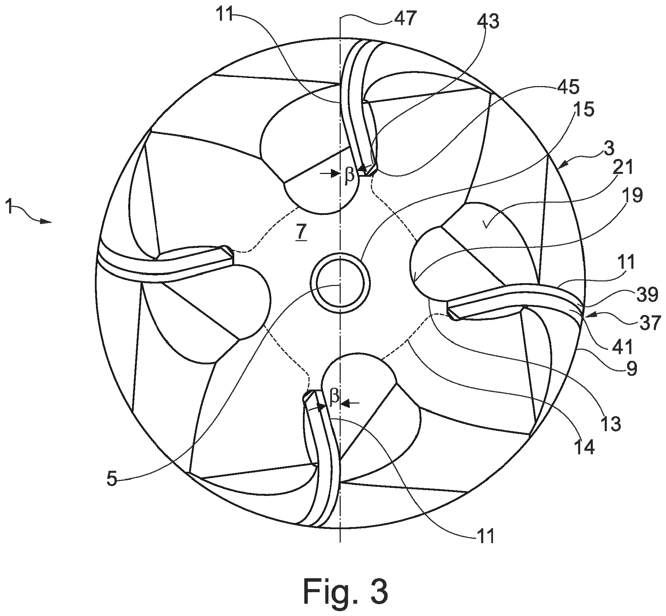

Figur 3 zeigt das in den vorangegangenen Figuren dargestellte Fräswerkzeug 1 in vergrößerter Stirnseitenansicht. Gleiche Teile sind mit gleichen Bezugszeichen versehen, sodass auf die Beschreibung oben verwiesen werden kann. Es ist ersichtlich, dass das Fräswerkzeug 1 mindestens einen Stollen, hier gleichmäßig in Umfangsrichtung verteilt angeordnete vier Stollen 9 aufweist, die gleichartig ausgebildet sind, und denen jeweils eine Schneide 11 zugeordnet ist.

In Figur 3 ist ein Ausführungsbeispiel des Fräswerkzeugs 1 dargestellt, bei dem hier die vier Stollen 9 mit einem plattenförmigen PKD-Element 37 versehen ist, welches eine PKD-Schicht 39 sowie eine Hartmetallschicht 41 aufweist. Die Hartmetallschicht 41 besteht vorzugsweise aus einem zähen, biegefesten Hartmetall, welches auch für das Fräswerkzeug 1 beziehungsweise dessen Grundkörper 3 und Stollen 9 vorgesehen ist. Dabei können Hartmetalle verschiedener Eigenschaften für die Hartmetallschicht 41 und für den Grundkörper 3 verwendet werden.

Deutlich erkennbar sind hier die Stirnseite 7 des Fräswerkzeugs 1 sowie die in der Stirnseite 7 sich öffnende Mündungsöffnung 15 eines das Fräswerkzeug 1 durchziehenden Kühlmittelkanals.

Besonders deutlich wird hier, dass die Stirnseite 7 stufen- und absatzfrei, ausgehend von der Mündungsöffnung 15, in den mindestens einen Spanraum 17, also hier in die vier Spanräume 17 übergeht. Aus der Mündungsöffnung 15 austretende Flüssigkeit kann also besonders effektiv von den Schneiden 11 abgetragene Späne über die Spanräume 17 austragen.

Besonders deutlich ist hier ebenfalls zu sehen, dass die Schneide 11 über einen Bogen 13 in die Stirnfläche 7 und in den Spanraum 17 übergeht. Das heißt, dass in diesem Übergangsbereich sich keinerlei Kanten, Absätze, Verwerfungen oder dergleichen befinden, sodass in die Schneiden 11 eingeleitete Kräfte keine Kraftspitzen hervorrufen, die zur Rissbildung und zu einem Bruch des Fräswerkzeugs 1 führen würden.

Deutlich wird aus Figur 3 auch, dass die den Schneiden 11 zugeordneten Spanflächen 25 tangential, also ansatzlos, in die zugehörigen Spanräume 17 übergehen.

Ebenso gehen die Stollen 9 über den Bereich 14 ohne jeden Absatz oder dergleichen in die Stirnseite 7 über, sodass auch in diesem Bereich Kraftspitzen vermieden werden, was die Standzeit des Fräswerkzeugs 1 auch bei sehr hohen Schneidleistungen erhöht.

Aus Figur 3 ist noch deutlich zu erkennen, dass das plattenförmige PKD-Element 37 an seinem der Mittelachse 5 zugewandten Ende eine Fase 43, und dass der Stollen 9 in diesem Bereich eine definierte Verrundung 45 aufweist, sodass das PKD-Element 37 in diesem Bereich den Grundkörper 3 nicht berührt. Diese Ausgestaltung verhindert, dass die bei Einsatz des Fräswerkzeugs 1 entstehenden hohen Kräfte, die über die Schneide 11 in das PKD-Element 37 eingeleitet werden, zu Kraftspitzen hier im Übergangsbereich zwischen dem PKD-Element 37 und dem Grundkörper 3 führen. Durch die Fase 43 und die Verrundung 45 wird hier ein Freiraum geschaffen, der Kraftspitzen bei Verwendung des Fräswerkzeugs 1 sicher vermeidet. Insbesondere trägt die Verrundung 45 selbst dazu bei, Kraftspitzen zu vermeiden.

Vorzugsweise wird eine Verrundung 45 mit einem Radius von 0,5 mm vorgesehen, wobei das PKD-Element 37 durch die Fase 43 so ausgebildet ist, dass das PKD-Element 37 den Grundkörper 3 des Fräswerkzeugs 1 im Bereich der Verrundung 45 nicht berührt und daher auch keine Kraftspitzen aufbaut.

Diese Ausgestaltung verhindert also - wie gesagt - Rissbildung auch bei höchsten Belastungen, wie sie sich beispielsweise bei einem Vorschub pro Zahn (f_{z}) von 0,4 mm bis 0,5 mm ergibt, während eine Vorschubgeschwindigkeit von 30 m/min (V_{f}) gegeben ist.

In Figur 3 ist eine gedachte Durchmesserlinie 47 eingezeichnet, welche zwei gegenüberliegende Schneiden 11 tangiert und durch die Mittelachse 5 verläuft. Es zeigt sich, dass hier ein positiver Spanwinkel β realisiert wird, der vorzugsweise abgestimmt ist auf den Durchmesser des Fräswerkzeugs 1 und auf die Anzahl der Stollen 9.

Bei einem Durchmesserbereich von 5 mm bis 32 mm wird der Spanwinkel β in einem Bereich von 2° bis 25°, insbesondere von 4° bis 20° gewählt.

Aus der Draufsicht gemäß Figur 3 ist nicht erkennbar, dass die Stirnseite 7 in die Bildebene von Figur 3 abgesenkt ist, derart, dass der tiefste Punkt der Spanfläche die Mündungsöffnung 15 umgibt, also der Mittelachse 5 am nächsten liegt. Die angrenzenden Bereiche steigen an und gehen dann in die Spanräume 17 über.

Vorzugsweise ist vorgesehen, dass die konkave Stirnseite kugelabschnittsförmig ausgebildet ist. Da die Stirnseite 7 gegenüber dem axial vordersten Bereich der Schneiden 11 in die Bildebene von Figur 3 zurückspringt, wölben sich die Schneiden 11 über die Stirnseite 7 hinaus auf den Betrachter zu, sodass das Fräswerkzeug 1 zur Bearbeitung eines Werkstücks entlang seiner Mittelachse 5 in eine Werkstückoberfläche hineingesenkt werden kann und somit eine Bearbeitung ins Volle ermöglicht. Ab einer gewünschten Tiefe wird das Fräswerkzeug 1 dann senkrecht zu seiner Mittelachse 5 verlagert, wie dies bei Fräsern üblich ist.

## Patentansprüche

1. Fräswerkzeug (1) mit
- einem eine Mittelachse und eine Stirnseite (7) aufweisenden Grundkörper (3),
- mindestens einem ausgehenden Stollen (9), und
- wenigstens einer an dem mindestens einen Stollen (9) vorgesehenen geometrisch definierten Schneide (11),
- die in ihrem der Mittelachse (5) nächstgelegenen Bereich unter einem Bogen (13) in die Stirnseite (7) übergeht,
wobei
- die wenigstens eine Schneide (11) einen positiven Achswinkel (α) mit der Mittelachse (5) einschließt, und
- die wenigstens eine Schneide (11) einen positiven Spanwinkel (β) mit einer die Mittelachse (5) schneidenden gedachten Geraden einschließt,
**dadurch gekennzeichnet, dass**
- das Fräswerkzeug (1) einen den mindestens einen Stollen (9) aufweisenden Werkzeugkopf (31) mit der Stirnseite (7) aufweist sowie einen sich auf der der Stirnseite (7) abgewandten Seite des Werkzeugkopfs (31) anschließenden Hals (29), der einen konischen Bereich (30) aufweist, dessen Durchmesser sich in Richtung auf den Werkzeugkopf (31) verringert.

2. Fräswerkzeug nach Anspruch 1, **dadurch gekennzeichnet, dass** der mindestens eine Stollen (9) in die Stirnseite (7) absatzlos übergeht.

3. Fräswerkzeug nach Anspruch 1, **gekennzeichnet durch** eine an dem mindestens einen Stollen (9) zumindest im Bereich der Schneide (11) vorgesehene PKD-Beschichtung oder ein zumindest im Bereich der Schneide (11) vorgesehenes, mit dem Stollen (9) verbundenes PKD-Element (37).

4. Fräswerkzeug nach Anspruch 3, **dadurch gekennzeichnet, dass** das PKD-Element (37) plattenförmig ausgebildet ist, wobei eine Seitenkante des PKD-Elements die Schneide (11) bildet.

5. Fräswerkzeug nach Anspruch 3 oder 4, **dadurch gekennzeichnet, dass** der Grundkörper (3) des Fräswerkzeugs (1) sowie der mindestens eine davon entspringende Stollen (9) aus zähem, biegefesten Vollhartmetall besteht.

6. Fräswerkzeug nach Anspruch 1, **dadurch gekennzeichnet, dass** dem mindestens einen Stollen (9) ein Spanraum (17) zugeordnet ist.

7. Fräswerkzeug nach Anspruch 6, **dadurch gekennzeichnet, dass** der Spanraum (17) - im Querschnitt gesehen - einen bogenförmig, vorzugsweise kreisbogenförmig ausgebildeten konkaven Grund (19) aufweist.

8. Fräswerkzeug nach Anspruch 7, **dadurch gekennzeichnet, dass** der Grund (19) des Spanraums (17) an seiner dem Stollen (9) abgewandten Seite in eine ebene Flanke (21) übergeht.

9. Fräswerkzeug nach Anspruch 1, **gekennzeichnet durch** einen in die Stirnseite (7) mündenden Kühl-/Schmiermittelkanal, dessen Mündungsöffnung (15) konzentrisch zur Mittelachse (5) angeordnet ist.

10. Fräswerkzeug nach Anspruch 9, **dadurch gekennzeichnet, dass** die Stirnseite zwischen Mündungsöffnung (15) und Spanraum (17) stufenfrei ausgebildet ist.

11. Fräswerkzeug nach Anspruch 9 oder 10, **dadurch gekennzeichnet, dass** die Stirnseite (7) konkav, insbesondere kugelabschnittsförmig ausgebildet ist.

## Claims

1. Milling tool (1) with
- a base body (3) comprising a central axis and a front end (7),
- at least one outgoing stud (9), and
- at least one geometrically defined cutting edge (11) provided on the at least one stud (9),
- which merges into the front end (7) under an arc (13) in its area closest to the central axis (5), wherein
- the at least one cutting edge (11) encloses a positive axial angle (α) with the central axis (5), and
- the at least one cutting edge (11) encloses a positive rake angle (β) with an imaginary straight line intersecting the central axis (5),
**characterised in that**
- the milling tool (1) has a tool head (31) comprising the at least one stud (9) with the front end (7) and a neck (29) adjoining the side of the tool head (31) facing away from the front end (7), which neck has a conical region (30) the diameter of which decreases in the direction of the tool head (31).

2. Milling tool according to claim 1, **characterised in that** the at least one stud (9) merges shoulderless into the front end (7).

3. Milling tool according to claim 1, **characterised by** a PCD coating provided on the at least one stud (9) at least in the region of the cutting edge (11) or a PCD element (37) provided at least in the region of the cutting edge (11) and connected to the stud (9).

4. Milling tool according to claim 3, **characterised in that** the PCD element (37) is configured plate-shaped, wherein a side edge of the PCD element forms the cutting edge (11).

5. Milling tool according to claim 3 or 4, **characterised in that** the base body (3) of the milling tool (1) and the at least one stud (9) emerging therefrom consist of tough, bending-resistant solid carbide.

6. Milling tool according to claim 1, **characterised in that** a chip space (17) is associated with the at least one stud (9).

7. Milling tool according to claim 6, **characterised in that** the chip space (17) - seen in cross section - has an arc-shaped, preferably circular arc-shaped concave base (19).

8. Milling tool according to claim 7, **characterised in that** the base (19) of the chip space (17) merges into a flat flank (21) on its side facing away from the stud (9).

9. Milling tool according to claim 1, **characterised by** a coolant/lubricant channel opening into the front end (7), the aperture (15) of which is arranged concentrically to the central axis (5).

10. Milling tool according to claim 9, **characterised in that** the front end is configured to be stepless between the aperture (15) and the chip space (17).

11. Milling tool according to claim 9 or 10, **characterised in that** the front end (7) is configured to be concave, in particular spherical section-shaped.

## Revendications

1. Outil de fraisage (1), comprenant :
- un corps de base (3) présentant un axe médian et une face frontale (7),
- au moins une barrette (9) en saillie, et
- au moins une lame (11) définie géométriquement prévue sur la au moins une barrette (9),
- qui, dans sa zone la plus proche de l'axe médian (5), se prolonge dans la face frontale (7) en formant un arc (13),
dans lequel
- la au moins une lame (11) forme un angle d'axe positif (α) avec l'axe médian (5), et
- la au moins une lame (11) comprend un angle de coupe positif (β) avec une droite imaginaire recoupant l'axe médian (5),
**caractérisé en ce que**,
- l'outil de fraisage (1) présente une tête d'outil (31) comportant la au moins une barrette (9) avec la face frontale (7) et un col (29) attenant au côté de la tête d'outil (31) opposé à la face frontale (7) qui présente une zone conique (30) dont le diamètre diminue en direction de la tête d'outil (31).

2. Outil de fraisage selon la revendication 1, **caractérisé en ce que,** la au moins une barrette (9) se fond sans raccord dans la face frontale (7).

3. Outil de fraisage selon la revendication 1, **caractérisé par** un revêtement PCD prévu sur la au moins une barrette (9) au moins dans la zone de la lame (11) ou par un élément PCD (37) prévu au moins dans la zone de la lame (11) et relié à la barrette (9).

4. Outil de fraisage selon la revendication 3, **caractérisé en ce que** l'élément PCD (37) est réalisé en forme de plaque, un bord latéral de l'élément PCD formant la lame (11).

5. Outil de fraisage selon la revendication 3 ou 4, **caractérisé en ce que** le corps de base (3) de l'outil de fraisage (1) ainsi que la au moins une barrette (9) qui en découle est en carbure monobloc résistant à la flexion.

6. Outil de fraisage selon la revendication 1, **caractérisé en ce qu'**une chambre à copeaux (17) est associée à la au moins une barrette (9).

7. Outil de fraisage selon la revendication 6, **caractérisé en ce que** la chambre à copeaux (17) présente - vu en section transversale - un fond concave (19) en forme d'arc, de préférence en forme d'arc de cercle.

8. Outil de fraisage selon la revendication 7, **caractérisé en ce que** le fond (19) de la chambre à copeaux (17) se transforme en un flanc plat (21) sur son côté opposé à la barrette (9).

9. Outil de fraisage selon la revendication 1, **caractérisé par** un canal de refroidissement/lubrifiant débouchant dans la face frontale (7), dont l'ouverture de sortie (15) est agencée de manière concentrique par rapport à l'axe médian (5).

10. Outil de fraisage selon la revendication 9, **caractérisé en ce que** la face frontale entre l'ouverture de sortie (15) et la chambre à copeaux (17) est réalisée sans gradin.

11. Outil de fraisage selon la revendication 9 ou 10, **caractérisé en ce que** la face frontale (7) est conçue concave, en particulier en forme de section sphérique.
